# EUROPEAN PATENT SPECIFICATION

(11) **EP 3 248 846 B1**
(45) Date of publication and mention of the grant of the patent: **27.11.2019**
(21) Application number: 17170850.6
(22) Date of filing: 12.05.2017
(51) Int. Cl.: B60R 21/13

(54) **WORK VEHICLE**
NUTZFAHRZEUG
VÉHICULE DE TRAVAIL

(30) Priority: 27.05.2016 JP 2016105979
(43) Date of publication of application: 29.11.2017
(73) Proprietor: Kubota Corporation, Osaka-shi, Osaka 556-8601 (JP)
(72) Inventor: AZUMA, Masanori, Sakai-Shi, Osaka, 5900823 (JP)
(74) Representative: Intès, Didier Gérard André

(56) References cited:
- EP-A1- 0 051 100
- EP-A2- 1 844 990
- WO-A1-2017/008222
- US-A- 5 779 272

## Description

### [TECHNICAL FIELD]

The present invention relates to a work vehicle having a protective frame including a lower frame fixed to a vehicle body frame and an upper frame raisably/collapsibly pivotally connected to an upper end portion of the lower frame.

### [BACKGROUND ART]

As an example of a protective frame to be mounted on a work vehicle described above, there is known a protective frame disclosed in Japanese Unexamined Patent Application Publication No. 2008-81043. According to the description in this publication, in association with switchover of a posture of the upper frame by an operator's manual operation to a raised posture or a collapsed posture, the protective frame is switched over to either a protecting state wherein the upper frame is set to the raised posture and disposed upwardly of the lower frame or a storing state wherein the upper frame is set to the collapsed posture and disposed rearwardly of the lower frame. Namely, the protective frame is manually operable.

As another example of a protective frame to be mounted on a work vehicle described above, there is known a protective frame disclosed in the description of European Patent Application Publication No. 0051100. According to the description in this publication, as a posture of an upper frame is switched over to a raised posture or a collapsed posture by an expansion or contraction operation of a hydraulic cylinder, the protective frame is switched to either a protecting state wherein the upper frame is set to the raised posture and disposed upwardly of the lower frame or a storing state wherein the upper frame is set to the collapsed posture and disposed forwardly of the lower frame. Namely, the protective frame is hydraulically operable.
EP 0 051 100 A1 relates to a roll-over protection system for a tractor and discloses a protective frame including a lower frame fixed to a vehicle body frame and an upper frame raisably/collapsibly pivotally connected to an upper end portion of the lower frame wherein in association with a raising/collapsing pivotal movement of the upper frame by an operator's manual operation, the protective frame is switched over to either a protecting state wherein the upper frame is set to a raised posture and disposed upwardly of the lower frame or a storing state wherein the upper frame is set to a collapsed posture and disposed on one front/rear side of the lower frame; and the protective frame includes an assisting mechanism configured to assist the manual operation. WO 2017/008222 A1 relates to a roll-over protection system.
US 5 779 272 A relates to a roll-over protection system.

### [SUMMARY OF THE INVENTION]

With the arrangement disclosed in Japanese Unexamined Patent Application Publication No. 2008-81043, when a worker switches the protective frame from the protecting state to the storing state, in order to prevent violent pivotal collapsing motion of the upper frame by a collapsing force due to the weight of this upper frame, it is a common practice to increase fastening of bolt/nut used for coupling the lower frame and the upper frame raisably and collapsibly pivotally to each other. Thus, when the worker switches the protective frame from the protecting state to the storing state, it is necessary to pivotally collapse the upper frame by a force greater than a retention force obtained by the fastening of the bolt/nut. Conversely, when the worker switches the protective frame from the storing state to the protecting state, it is necessary to pivotally raise the upper frame by a greater force that can overwhelm a sum of the above-described retention force and the collapsing force due to the weight of the upper frame. Therefore, there remains room for improvement in the respect of desirable reduction in the worker's labor required for switchover operation of the protective frame.

According to an arrangement disclosed in the description of European Patent Application Publication No. 0051100, for switchover of the protective frame to the protecting state or the storing state, the worker needs only to operate a special operational tool to expand or contract the hydraulic cylinder. Thus, the worker's labor required for switchover operation of the protective frame can be reduced significantly. On the other hand it is necessary to provide the hydraulic cylinder, a switching valve for switching flow of oil to the hydraulic cylinder, etc. Further, a labor is required for pipe layout for a plurality of hydraulic devices such as the hydraulic cylinder, the switching valve, etc. Therefore, the arrangement would invite cost increase, complexity of manufacture, etc. due to an increased number of components.

Namely, there is a need for reducing labor required for switchover operations of the protective frame with restriction of cost increase and manufacture complication.

Accordingly, a work vehicle according to claims 1, 3, 6 and 7 are provided.

A work vehicle comprises a protective frame including a lower frame fixed to a vehicle body frame and an upper frame raisably/collapsibly pivotally connected to an upper end portion of the lower frame;
wherein in association with a raising/collapsing pivotal movement of the upper frame by an operator's manual operation, the protective frame is switched over to either a protecting state wherein the upper frame is set to a raised posture and disposed upwardly of the lower frame or a storing state wherein the upper frame is set to a collapsed posture and disposed on one front/rear side of the lower frame: and
the protective frame includes an assisting mechanism configured to assist the manual operation, the work vehicle is characterized in that the assisting mechanism is in a position along a vertical direction when the upper frame is set to the storing state.

With the above-described solution, when the worker raisably/collapsibly pivots the upper frame to the raised posture or the collapsed posture for switchover of the protective frame to either the protecting state or the storing state, assistance provided by the assisting mechanism can reduce the labor required for the manual operation of the protective frame.

And, since the assisting mechanism needs no energy supply unlike an actuator such as a hydraulic cylinder or an electrically powered cylinder, such components as a switching valve, an electronic device, a pipe, a cable, etc. for feeding energy to the actuator become unnecessary.

As a result, it has become possible to reduce labor required for switchover operations of the protective frame with restriction of cost increase and manufacture complication.

According to one preferred embodiment of the present invention:
the assisting mechanism is set such that when the upper frame is disposed on more raised posture side than a predetermined posture between the raised posture and the collapsed posture, an assisting force of the assisting mechanism is greater than a collapsing force due to the weight of the upper frame; whereas, when the upper frame is disposed on more collapsed posture side than the predetermined posture, the assisting force of the assisting mechanism is smaller than the collapsing force due to the weight of the upper frame.

With the above-described arrangement, when the worker collapsibly pivots the upper frame from the raised posture to the collapsed posture, the upper frame is pivotally operated in the collapsing direction only until the upper frame moves from the raised posture through the predetermined posture to reach the collapsed posture side. The operational force of the worker in this is set such that a resultant force comprising sum of the worker's operational force and the collapsing force due to the weight of the upper frame is greater than the assisting force from the assisting mechanism. After the upper frame reaches the collapsed posture side, the collapsing force due to the weight of the upper frame alone collapsibly pivots the upper frame toward the collapsed posture.

Further, when the worker raisably pivots the upper frame from the collapsed posture to the raised posture, the upper frame is pivotally operated in the raising direction only until the upper frame moves from the collapsed posture through the predetermined posture to reach the raised posture side. The operational force of the worker in this is set such that a resultant force comprising sum of the worker's operational force and the assisting force from the assisting mechanism is greater than the collapsing force due to the weigh of the upper frame. After the upper frame reaches the raised posture side, the assisting force of the assisting mechanism alone raisably pivots the upper frame toward the raised posture.

As a result, the labor required for switchover operations of the protective frame can be further reduced.

According to a further preferred embodiment of the present invention:
the assisting mechanism comprises a gas spring disposed under a raised posture to a collapsing side of the upper frame; and
the gas spring pivotally urges the upper frame in the raising direction.

For instance, if a tension spring were employed as the assisting mechanism, this tension spring would have to be disposed on a laterally outer side of the protective frame in order to prevent the tension spring from coming into contact with the lower frame during the raising pivotal movement of the upper frame. Thus, the provision of the assisting mechanism would invite inconvenience of increase of a left/right width of the protective frame, as well as increase of a left/right width of the vehicle body.

On the other hand, in the case of the above-described inventive arrangement, since the assisting mechanism comprises a gas spring, there is no need to dispose the assisting mechanism on the laterally outer side of the protective frame. So, the provision of the assisting mechanism does not invite the inconvenience of increase of the left/right width of the vehicle body.

As a result, the labor required for switchover operation of the protective frame can be reduced, without inviting the inconvenience of the left/right width of the vehicle body becoming larger.

Moreover, in the case of the above-described inventive arrangement, when the worker collapsibly pivots the upper frame from the raised posture to the collapsed posture in order to switch over the protective frame from the protecting state to the storing state, the collapsing pivotal movement of the upper frame due to its weight can be restricted by the assistance provided from the assisting mechanism. With this, it becomes possible to prevent occurrence of inconvenience of the upper frame collapsibly pivoting violently by the collapsing force due to its weight, without providing such measure as increasing of fastening of bolt/nut which collapsibly/raisably couples the lower frame and the upper frame.

Further, when the worker raisably pivots the upper frame from the collapsed posture to the raised posture in order to switch over the protective frame from the storing state to the protecting state, the rising pivotal movement of the upper frame can be assisted by the assistance from the assisting mechanism. Thus, the worker can effect, speedily with a light operation feel, the raising pivotal operation of the upper frame against the collapsing force of the upper frame due to its own weight.

According to a still further preferred embodiment of the present invention:
a lower end portion of the gas spring is connected to the vehicle body frame or the lower frame via a position adjustment mechanism for allowing position adjusting of the lower end portion in a vertical direction.

With the above-described inventive arrangement, the worker can adjust the connecting position of the lower end portion of the gas spring to the vehicle body frame or the lower frame in the vertical direction by the position adjustment mechanism.

With this, a maximum length of the gas spring under its assembled state can be changed, whereby the retention force exerted by the gas spring with this maximum length under the raised posture of the upper fame can be adjusted.

Further, as the disposing height of the position adjustment mechanism is lowered, contact of e.g. a worker with the position adjustment mechanism will occur less likely and occurrence of inconvenient of inadvertent position adjustment of the lower end portion of the gas spring due to such contact can be restricted.

According to a still further preferred embodiment of the present invention:
an upper end portion of the gas spring is connected to the upper frame via a position adjustment mechanism for allowing position adjusting of the upper end portion in a vertical direction.

With the above-described inventive arrangement, the worker can adjust the connecting position of the upper end portion of the gas spring to the upper frame in the vertical direction by the position adjustment mechanism.

With this, a maximum length of the gas spring under its assembled state can be changed, whereby the retention force exerted by the gas spring with this maximum length under the raised posture of the upper fame can be adjusted.

Further, as the disposing height of the position adjustment mechanism is increased, it becomes easier for the worker to effect an operation of the position adjusting mechanism, and position adjustment in the vertical direction of the connecting position of the upper end portion of the gas spring to the upper frame by the operation of the position adjustment mechanism can be easily carried out.

According to a still further preferred embodiment of the present invention:
the position adjustment mechanism includes a first member pivotally pin-connected to a lower end portion of the gas spring, a second member fixed to the vehicle body frame or the lower frame, a screw type first connecting tool for connecting the first member to the second member from the lower side thereof, with allowing position adjustment in the vertical direction, and a second connecting tool for connecting the first member to the second member position-non-adjustably at a connecting position by the first connecting tool.

With the above-described inventive arrangement, when the worker assembles the gas spring to the vehicle body, the worker will firstly pivotally connect the upper end portion of the gas spring to the upper frame, with pin-connecting the first member to the lower end portion of the gas spring. Next, as the worker effects a threading operation of the first connecting tool for connecting the first member to the second member upwardly thereof, in association with this threading operation, the gas spring will be contracted and the first member will be connected to the second member. After completion of this connection, when the worker effects a connecting operation by the second connecting tool, via this second connecting tool, the first member will be fixed to the second member in position-non-adjustable manner, whereby the assembly of the gas spring to the vehicle body will be completed.

On the other hand, in the case of an arrangement e.g. wherein the lower end portion of the gas spring is pin-connected to the vehicle body frame or the lower frame, the worker will have to firstly pivotally connect the upper end portion of the gas spring to the upper frame and then to effect a connecting operation for pin-connecting the lower end portion of the gas spring to the vehicle body frame or the lower frame while effecting simultaneously and manually a contracting operation for contracting the gas spring, in order to realize a state that the lower end portion of the gas spring is positioned at the connecting position to the vehicle body frame or the lower frame.

Namely, with the above-described inventive arrangement, the gas spring can be contracted by a threading-in operation of the first connecting tool. As there is no need for manual operation for contracting the gas spring, the assembly of the gas spring to the vehicle body can be easier.

According to a still further preferred embodiment of the present invention:
the position adjustment mechanism includes a first member pivotally pin-connected to an upper end portion of the gas spring, a second member fixed to the upper frame, a screw type first connecting tool for connecting the first member to the second member from the upper side thereof, with allowing position adjustment in the vertical direction, and a second connecting tool for connecting the first member to the second member position-non-adjustably at a connecting position by the first connecting tool.

With the above-described inventive arrangement, when the worker assembles the gas spring to the vehicle body, the worker will firstly pivotally connect the lower end portion of the gas spring to the vehicle body or the lower frame, with pin-connecting the first member to the upper end portion of the gas spring. Next, as the worker effects a threading operation of the first connecting tool for connecting the first member to the second member downwardly thereof, in association with this threading operation, the gas spring will be contracted and the first member will be connected to the second member. After completion of this connection, when the worker effects a connecting operation by the second connecting tool, via this second connecting tool, the first member will be fixed to the second member in position-non-adjustable manner, whereby the assembly of the gas spring to the vehicle body will be completed.

On the other hand, in the case of an arrangement e.g. wherein the upper end portion of the gas spring is pin-connected to the upper frame, the worker will have to firstly pivotally connect the lower end portion of the gas spring to the vehicle body frame or the lower frame and then to effect a connecting operation for pin-connecting the upper end portion of the gas spring to the upper frame while effecting simultaneously and manually a contracting operation for contracting the gas spring, in order to realize a state that the upper end portion of the gas spring is positioned at the connecting position to the upper frame. Namely, with the above-described inventive arrangement, the gas spring can be contracted by a threading-in operation of the first connecting tool as described above. As there is no need for manual operation for contracting the gas spring, the assembly of the gas spring to the vehicle body can be easier.

According to a still further preferred embodiment of the present invention:
an upper end portion of the lower frame comprises a U-shape as seen in a plan view, including left and right side walls to which a lower end portion of the upper frame is connected via a support shaft under a posture along the left/right direction and a front wall or a rear wall that inhibits pivotal movement of the upper frame from the raised posture to the side opposite the collapsed posture;
the protective frame includes a fixing mechanism for fixing the upper frame under the raised posture; and
the fixing mechanism includes a first hole extending through the left and right side walls in the left/right direction, a second hole extending through the lower end portion of the upper frame in the left/right direction, a fixing pin to be inserted into the first hole and the second hole under the raised posture, a female threaded portion positioned at a same height as the first hole and extending through the front wall or the rear wall in the front/rear direction, and a bolt to be threaded and fitted to the female threaded portion.

With the above-described inventive arrangement, the worker will firstly pivotally and raisably pivot the upper frame to the raised posture and then insert the fixing pin into the left and right first holes of the lower frame and the second hole of the upper frame, whereby the upper frame can be fixed under the raised posture. Thereafter, with a threading-in operation of the bolt threaded and fitted into the female threaded portion of the lower frame, a predetermined portion located between the fixing pin and the bolt in the lower end portion of the upper frame is clamped by and between the fixing pin and the bolt, whereby wobbling or looseness of the upper frame under the raised posture can be prevented.

As a result, the upper frame can be fixed without wobbling or looseness in a reliable manner under the raised posture.

According to a still further preferred embodiment of the present invention:
an upper end portion of the lower frame comprises a U-shape as seen in a plan view, including left and right side walls to which a lower end portion of the upper frame is connected via a support shaft under a posture along the left/right direction and a front wall or a rear wall that inhibits pivotal movement of the upper frame from the raised posture to the side opposite the collapsed posture;
the protective frame includes a fixing mechanism for fixing the upper frame under the raised posture; and
the fixing mechanism includes a receiving portion disposed at a position more upwards than the support shaft in the front wall or the rear wall and configured to receive the upper frame under the raised posture, a female threaded portion positioned downwardly of the support shaft and extending through the front wall or the rear wall in the front/rear direction, and a bolt to be threaded and fitted to the female threaded portion.

With the above-described inventive arrangement, the worker will firstly pivotally and raisably pivot the upper frame to the raised posture. Thereafter, with a threading-in operation of the bolt threaded and fitted into the female threaded portion of the lower frame, a lower end portion downwardly of the support shaft in the upper frame is pressed by the bolt. With this, the lower end portion upwardly of the support shaft in the upper fame will be pressed against the receiving portion, whereby the upper frame is fixed under the raised posture without wobbling or looseness.

Namely, after raisably pivoting the upper frame to the raised posture, with only a threading-in operation of the bolt, the upper frame can be fixed without wobbling or looseness in a reliable manner under the raised posture.

### [BRIEF DESCRIPTION OF THE DRAWINGS]

Fig. 1 is a left side view of a tractor,
Fig. 2 is a plan view of the tractor,
Fig. 3 is a left side view of a front half portion of the tractor, illustrating a protecting state and a storing state of a projective frame,
Fig. 4 is a front view of the protective frame showing an arrangement of this protective frame,
Fig. 5 is a perspective view of principal portions, showing a state before a lower end portion of an assisting mechanism is connected to a lower frame,
Fig. 6 is a perspective view of the principal portions, showing a state when the lower end portion of the assisting mechanism is connected to the lower frame via a first connecting tool,
Fig. 7 is a perspective view of the principal portions, showing a state when the lower end portion of the assisting mechanism is connected to the lower frame via the first connecting tool and then fixed by a second connecting tool,
Fig. 8 is a left side view in vertical section of the principal portions, showing a fixed state of the upper frame under a raised posture by means of a fixing mechanism, and
Fig. 9 is a left side view in vertical section of the principal portions, showing the fixed state of the upper frame under the raised posture by means of a fixing mechanism according to a further embodiment.

### [EMBODIMENTS]

Next, as an example of mode of embodiment of the present invention, there will be explained an embodiment wherein the present invention is applied to a tractor as an example of a work vehicle, with reference to the accompanying drawings.

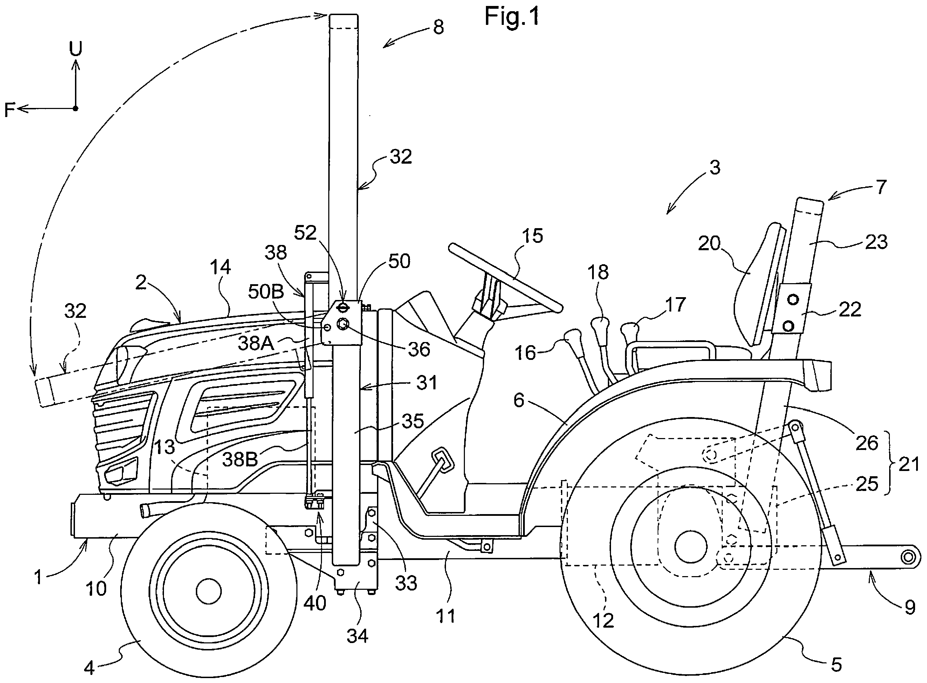

Incidentally, a direction denoted with an arrow of sign F shown in Fig. 1 represents the front (forward) side of the tractor, and a direction denoted with an arrow of sign U represents an upper side of the tractor.

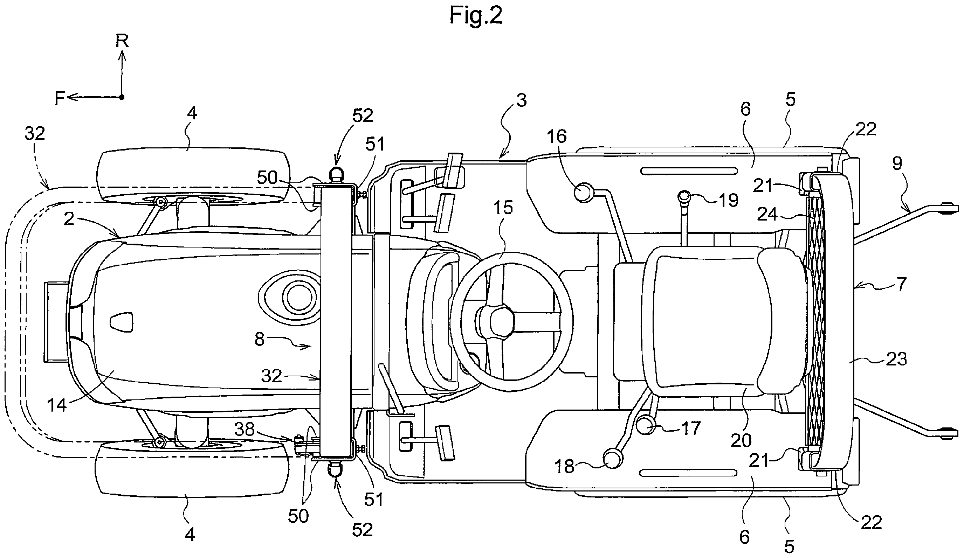

Incidentally, a direction denoted with an arrow of sign F shown in Fig. 2 represents the front (forward) side of the tractor, and a direction denoted with an arrow of sign R represents a right side of the tractor.

As shown in Figs. 1 through 3, a tractor illustrated in the instant embodiment includes a vehicle body frame 1 extending between front and rear sides of a vehicle body, an engine section 2 disposed on a front side of the vehicle body, a riding type driving section 3 disposed on a rear side of the vehicle body, left and right front wheels 4 steerable and drivable by power from the engine section 2, left and right rear wheels 5 driven by power from the engine section 2, left and right rear fenders 6 that extend over the left and right rear wheels 5 from above, a first protective frame 7 disposed at a rear end portion of the vehicle body, a second protective frame 8 disposed on a front/rear intermediate side of the vehicle body, a link mechanism 9 for enabling attachment/detachment of an implement (not shown) such as a tiller device or the like to the rear portion of the vehicle body, and so on.

The vehicle body frame 1 includes a front frame 10 formed of a steel plate, an intermediate frame 11 formed of a steel plate, a rear frame 12 made of cast iron, and so on. Though not shown, the rear frame 12 acts also as a transmission case incorporating a main speed changer device for traveling, an auxiliary speed changer device for traveling, a speed changer device for implement, etc. And, in a rear portion of the rear frame 12, there are mounted a hydraulic lift device that enables up/down driving of the implement via e.g. a link mechanism 9, a PTO shaft enabling power take-off for the implement, etc.

As shown in Figs. 1 through 3, the engine section 2 includes an engine 13 supported to the front frame 10, a hood 14 for covering the engine 13, etc., and so on.

The driving section 3 includes a steering wheel 15 for steering the front wheels, a main speed changer lever 16 for allowing manual operation of the main speed changer device, an auxiliary speed changer lever 17 for allowing manual operation of the auxiliary speed changer device, a speed changer lever 18 for implement for enabling manual operation of the implement speed changer device, a lift lever 19 for enabling manual operation of the lift device, a driver's seat 20 disposed between the left and right rear fenders 6, and so on. The main speed changer lever 16 and the lift lever 19 are disposed on right outer side of the driver's seat 20, and the auxiliary speed changer lever 17 and the implement speed changer lever 18 are disposed on left outer side of the driver's seat 20.

As shown in Fig. 1 and Fig.2, the first protective frame 7 includes a first lower frame 21 fixed to the vehicle body frame 1, a first upper frame 23 connected via left and right relay members 22 to an upper end portion of the first lower frame 21, a partitioning wall 24 supported to the left and right relay members 22 and the first upper frame 23, and so on.

The first lower frame 21 includes left and right connecting members 25 bolt-connected to a rear end portion of the rear frame 12, left and right first strut members 26 extending upwards from the left and right connecting members 25, and so on. The left and right connecting members 25 are formed of steel plates. The left and right strut members 26 are formed of angular steel pipes and are bent in the form of a crank such that their lower portions are positioned between the left and right connecting members 25 and the left and right rear wheels 5 and their upper portions are positioned upwardly of the left and right rear wheels 5.

The first upper frame 23 is formed of an angular steel pipe and is bent in the form of a downwardly oriented U-shaped extending between upper end portions of the left and right relay members 22. And, an upper end of the first upper frame 23 is located adjacent the upper end of the driver's seat 20 and at a position higher than the upper end of the driver's seat 20.

The partitioning wall 24 has a left/right width extending between the left and right opposed ends of the first upper frame 23 and a vertical width extending from vicinity of the upper ends of the left and right rear fenders 6 to the upper end portion of the first upper frame 23 and is configured to partition between a driving side area on the vehicle body front side from the first protective frame 7 in the vehicle body and a implement side area on the vehicle body rear side from the first protective frame 7.

With the above-described arrangement, it is possible to avoid the possibility of a foreign object coming into accidental contact with the respective operational tools such as the main speed changer lever 16 provided in the driving section 3 when the foreign object such as a worker's arm which effects a maintenance operation on the implement in the implement side area for instance.

As the partitioning wall 24, there is employed a porous plate defining many angular holes.

With the above, in spite of the provision of the partitioning wall 24, it is still possible to secure driver's visibility for the rear side of the vehicle body and also to secure air-permeability between the driving side area and the implement side area of the vehicle body, whereby resistance applied to the partitioning wall 24 during traveling can be reduced.

As shown in Figs. 1 through 4, the second protective frame 8 includes a second lower frame 31 fixed to the vehicle body frame 1, a second upper frame 32 raisably/collapsibly pivotally connected to an upper end portion of the second lower frame 31, and so on. And, in association with a raising/collapsing pivotal movement of the second upper frame 32 by a manual operation, the second protective frame 8 is switched over to either a protecting state in which the second upper frame 32 is under a raised state and disposed upwardly of the second lower frame 31 or a storing state in which the second upper frame 32 is under a collapsed state and disposed forwardly of the second lower frame 31.

The second lower frame 31 includes a single inner connecting member 33 bolt-connected to a rear end portion of the front frame 10, left and right outer connecting members 34 bolt-connected to the front frame 10 and the inner connecting member 33, left and right second strut members 35 extending upwards from the left and right outer connecting members 34, and so on. The inner connecting member 33 and the left and right outer connecting members 34 are formed of steel plates. The left and right second strut members 35 are formed of angular steel pipes and have their lower end sides bent into J-shape bent to the lateral outer and upper side from the left and right outer connecting members 34. The left and right second strut members 35 have their extension lengths from the left and right outer connecting members 34 set such that the height positions of their upper end portions may be same as the height position of the upper end portion of the hood 14.

The second upper frame 32 is formed of an angular steel pipe and is bent into a downwardly oriented U-shape extending between upper end portions of the left and right second strut members 35. And, left and right lower end portions of the second upper frame 32 are connected via left and right bolts 36 and left and right nuts 37 to the upper end portions of the left and right second strut members 35 to be pivotable in the front/rear direction.

The extending length of the second upper frame 32 from the upper end portion of the second lower frame 31 is set such that under the raised posture, the upper end portion of the second upper frame 32 is located on more upper side of the vehicle body than the upper end portion of the first protective frame 7 and, under the collapsed posture, the front end portion of the second upper frame 32 is located more forwardly of the vehicle body than the front end portion of the hood 14. Further, the second upper frame 32 is set such that under the collapsed posture, this second upper frame 32 as a whole may be located on lower side of the vehicle body than the upper end of the hood 14.

With the above-described arrangement, under the storing state where the second upper frame 32 is switched to the raised posture, the second protective frame 8 extends longer than the first protective frame 7 from the vehicle body frame 1 on the upper side of the vehicle body. As a result, a driver seated at the driver's seat 20 can be effectively protected together with the first protective frame 7.

Further, under the storing state in which the second upper frame 32 is switched to the collapsed state, the second upper frame 32 is located on lower side of the vehicle body than the upper end of the hood 14, whereby the tractor can be easily stored in a storage house having a low profile, etc.

The second protective frame 8 includes an assisting mechanism 38 configured to assist the manual operation when the worker switches over the posture of the second upper frame 32 to the raised posture or to the collapsed posture. This assisting mechanism 38 urges the second upper frame 32 pivotally in the raising direction.

With this arrangement, when the worker collapsibly pivots the second upper frame 32 from the raised posture to the collapsed posture in order to switch over the second protective frame 8 from the protecting state to the storing state, collapsing pivotal movement due to the weight of the second upper frame 32 can be restricted by the assistance provided by the assisting mechanism 38. With this, without having to provide such measure as increasing fastening of the bolt 36 and the nut 37 for raisably/collapsibly pivotally connecting the second lower frame 31 and the second upper frame 32, it is possible to prevent occurrence of such inconvenience as accidental violent collapsible pivotal movement of the second upper frame 32 by the collapsing force due to its own weight.

Further, when the worker raisably pivots the second upper frame 32 from the collapsed posture to the raised posture in order to switch over the second protective frame 8 from the storing state to the protecting state, the rising pivotal movement of the second upper frame 32 can be promoted by the assistance provided from the assisting mechanism 38. With this, the worker can effect the operation of raisably pivoting the second upper frame 32 against the collapsing force due to the weight of the second upper frame 32, in a light and speedy manner.

And, as this assisting mechanism 38 does not need energy supply unlike an actuator such as a hydraulic cylinder or electrically driven cylinder, in comparison with a case of providing such actuator, such components as a switching valve, an electronic device, piping, wiring etc. for supplying energy to the actuator can be omitted.

Consequently, it is possible to reduce the labor required for switchover operation of the second protective frame 8 while restricting cost increase or increase of complexity manufacture due to increased number of components.

The assisting mechanism 38 comprises a gas spring 38 which is mounted under a raised posture to the collapsing side of the second upper frame 32. And, this gas spring 38 pivotally urges the second upper frame 32 in the rising direction by its expansion operation.

For instance, if a tension spring were employed as the assisting mechanism 38, this tension spring would have to be disposed on a laterally outer side of the second protective frame 8 in order to prevent the tension spring from coming into contact with the second lower frame 31 during the raising pivotal movement of the second upper frame 32. Thus, the provision of the assisting mechanism 38 would invite inconvenience of increase of a left/right width of the second protective frame 8 as well as increase of a left/right width of the vehicle body.

On the other hand, in the case of the above-described inventive arrangement, since the assisting mechanism 38 comprises the gas spring 38, there is no need to dispose the assisting mechanism 38 on the laterally outer side of the second protective frame 8. So, the provision of the assisting mechanism 38 does not invite the inconvenience of increase of the left/right width of the vehicle body.

As a result, the labor required for switchover operation of the second protective frame 8 can be reduced, without inviting the inconvenience of the left/right width of the vehicle body becoming larger.

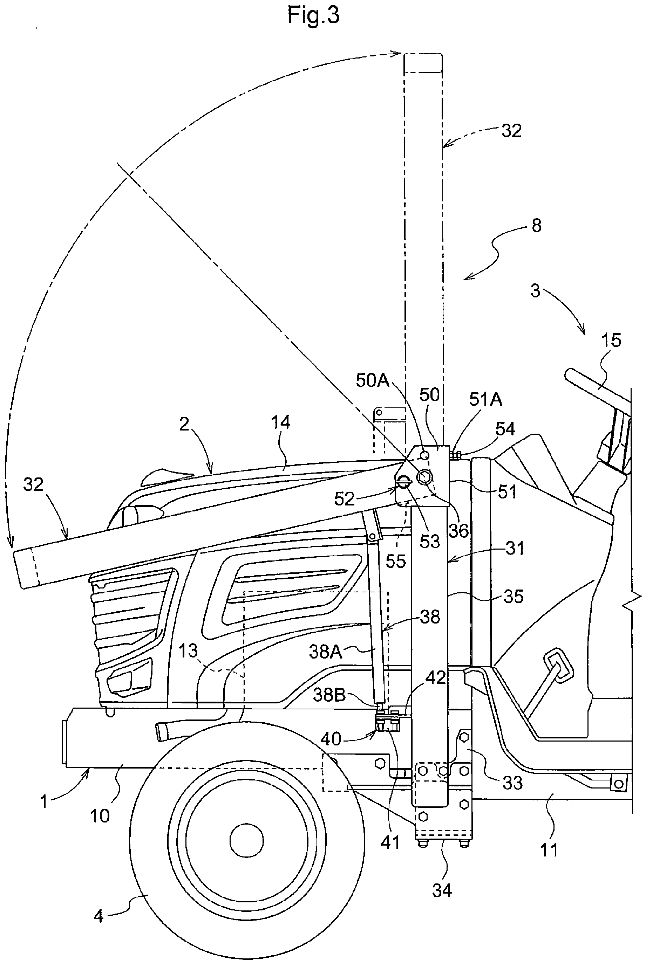

The gas spring 38 is set such that when the second upper frame 32 is located on more raised posture side than a predetermined posture (a pivotal posture denoted by one-dot chain line in Fig. 3) between the raised posture and the collapsed posture, the assisting force provided by the gas spring 38 is greater than the collapsing force due to the weight of the second upper frame 32. Further, the gas spring 38 is set such that when the second upper frame 32 is located on more collapsing side than the predetermined posture, the assisting force of the gas spring 38 is smaller than the collapsing force due to the weight of the second upper frame 32.

With the above, when the worker collapsibly pivots the second upper frame 32 from the raised posture to the collapsed posture, the second upper frame 32 will be pivoted in the collapsing direction only until the second upper frame 32 moves from the raised posture through the predetermined posture to reach the collapsed posture side. In this, the operational force of the worker is set such that the resultant force of the worker's operational force and the collapsing force due to the weight of the second upper frame 32 is greater than the assisting force of the gas spring 38. After arrival of the second upper frame 32 at the collapsed posture side, only the collapsing force due to the weight of the second upper frame 32 collapsibly pivots the second upper frame 32 toward the collapsed posture.

Also, when the worker raisably pivots the second upper frame 32 from the collapsed posture to the raised posture, the second upper frame 32 will be pivoted in the rising direction only until the second upper frame 32 moves from the collapsed posture through the predetermined posture to reach the raised posture side. In this, the operational force of the worker is set such that the resultant force of the worker's operational force and the assisting force of the gas spring 38 is greater than the collapsing force due to the weight of the second upper frame 32. After arrival of the second upper frame 32 at the raised posture side, only the assisting force of the assisting mechanism 38 raisably pivots the second upper frame 32 toward the raised posture.

Consequently, the labor required for switchover operation of the second protective frame 8 can be further reduced.

The gas spring 38 is mounted to the second protective frame 8 under a raised posture in which a cylinder tube 38A is located on an upper side of the vehicle body and a piston rod 38B is located on a lower side of the vehicle body.

With the above-described arrangement, it is possible to prevent occurrence of such inconvenience as intrusion of rainwater or cleaning water through a sliding contact portion between the cylinder tube 38A and the piston rod 38B to the interior of the gas spring 38.

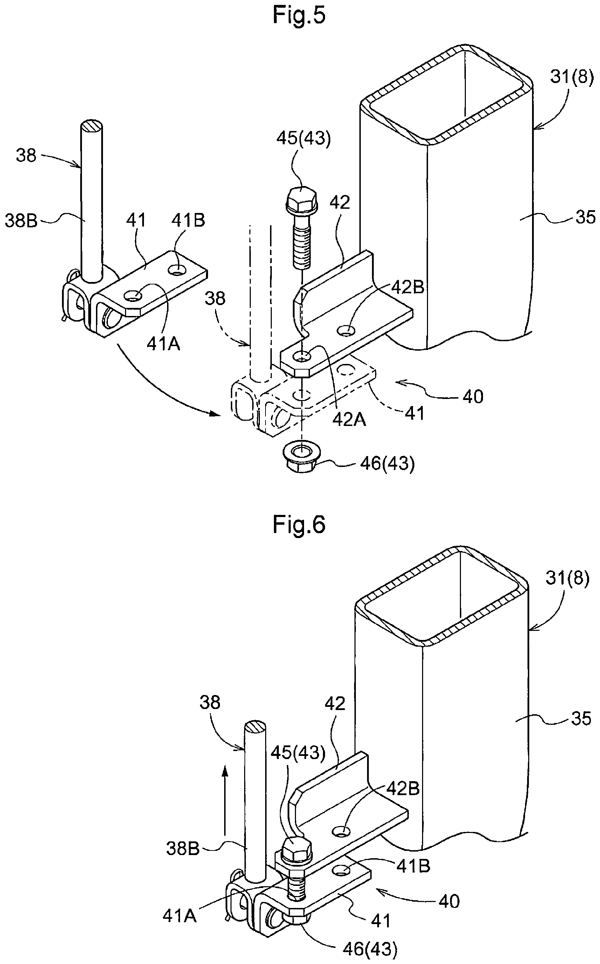

As shown in Figs. 1-7, the upper end portion of the gas spring 38 is pivotally pin-connected to the second upper frame 32. The lower end portion of the gas spring 38 is connected to the second lower frame 31 via a connecting mechanism 40 for threadingly connecting this lower end portion into the second lower frame 31 from the underside thereof.

With this, when the gas spring 38 is to be assembled with the vehicle body, the worker will firstly pivotally pin-connect the upper end portion of the gas spring 38 to the second upper frame 32. Then, via the connecting mechanism 40, the lower end portion of the gas spring 38 will be connected by being threaded into the second lower frame 31 from the underside thereof. With this, at the time of threading-in connection by the connecting mechanism 40, in association with this threading-in operation, the gas spring 38 will be contracted, while the lower end portion of the gas spring 38 will be connected to the second lower frame 31 from the underside thereof.

On the other hand, in the case of e.g. an arrangement in which the lower end portion of the gas spring 38 is pin-connected to the second lower frame 31, the worker will have to effect the connecting operation for pin-connecting the lower end portion of the gas spring 38 to the second lower frame 31 while effecting simultaneously manual contracting operation of contracting the gas spring 38 in order to realize the condition that the lower end portion of the gas spring 38 is located at the connecting position to the second lower frame 31 after pivotally pin-connecting the upper end portion of the gas spring 38 to the second upper frame 32.

Namely, with the arrangement of connecting via the connecting mechanism 40, as described above, the gas spring 38 can be contracted in association with the threading-in operation at the time of threading-in connection by the connecting mechanism 40, thus eliminating the need for effecting the manual operation for contacting the gas spring 38. Thus, assembly of the gas spring 38 to the vehicle body is made easy.

As shown in Figs. 3-7, the connecting mechanism 40 includes a first member 41 pivotally pin-connected to the lower end portion of the gas spring 38, a second member 42 fixed to the second lower frame 31, a screw-type first connecting tool 43 for connecting the first member 41 to the second member 42 from the underside thereof, and a second connecting tool 44 for connecting the first member 41 to the second member 42 after the connection by the first connecting tool 43.

With this arrangement, when the lower end portion of the gas spring 38 is to be connected to the second lower frame 31, the worker will firstly pin-connect the first member 41 to the lower end portion of the gas spring 38. Next, as the worker effects a threading-in operation of the first connecting tool 43 for connecting the first member 41 to the second member 42 disposed upwardly thereof, in association with this threading-in operation, the gas spring 38 will be contracted, while the first member 41 will be connected to the second member 42. And, after completion of this connection, when a connecting operation by the second connecting tool 44 is effected, the first member 41 and the second member 42 will be further connected to each other by the second connecting tool 44.

With this, the worker can firmly fix the first member 41 to the second member 42 by the simple operation.

The first connecting tool 43 includes a first bolt 45 to be inserted into first connecting holes 41A, 42A respectively formed in the first member 41 and the second member 42 and a first nut 46 to be threaded and fitted to the first bolt 45.

The second connecting tool 44 includes a second bolt 47 to be inserted into second connecting holes 41B, 42B respectively formed in the first member 41 and the second member 42 and a second nut 48 to be threaded and fitted to the second bolt 47.

The lower end portion of the gas spring 38 is position-changed in the vertical direction for its connecting to the second lower frame 31, in accordance with a threading-in amount of the first nut 46 relative to the first bolt 45 and a threading-in amount of the second nut 48 relative to the second bolt 47.

Namely, the connecting mechanism 40 can be made to function as a 'position adjustment mechanism' 40 for connecting the lower end portion of the gas spring 38 to the second lower frame 31 in a position-adjustable manner in the vertical direction. And, the lower end portion of the gas spring 38 will be connected to the second lower frame 31 via such position adjustment mechanism 40 allowing position adjustment of this lower end portion in the vertical direction.

With the above, the worker is allowed to adjust the connecting position of the lower end portion of the gas spring 38 to the second lower frame 31 in the vertical direction by means of the position adjustment mechanism 40. With this position adjustment, the maximum length of the gas spring 38 under its assembled state can be changed, so that via this maximum length, it is possible to adjust the retention force exerted by the gas spring 38 for retaining the second upper frame 32 under the raised posture.

Further, with the above-described position adjustment, it is possible to change the predetermined posture where the collapsing force due to the weight of the second upper frame 32 and the assisting force of the gas spring 38 are balanced with each other.

Incidentally, in case the connecting mechanism 40 is caused to act as the position adjustment mechanism 40 as described above, between the first member 41 and the second member 42, a spacer (not shown) will be interposed for maintaining the lower end portion of the gas spring 38 at the connecting position after the position adjustment relative to the second lower frame 31.

As shown in Figs. 1 through 4 and Fig. 8, the left and right upper end portions of the second lower frame 31 are formed respectively as U-shape as seen in the plan view having left and right side walls 50 and a rear wall 51. To the left and right side walls 50 of the respective upper end portion of the second lower frame 31, the left or right lower end portion of the second upper frame 32 is connected via e.g. a bolt 36 which acts as a support shaft along the left/right direction. The rear wall 51 of the respective upper end portion of the second lower frame 31 receives the left or right lower end portion of the second upper frame 32, thus preventing pivotal movement of the second upper frame 32 from the raised posture to the side opposite the collapsed posture.

The second protective frame 8 includes left and right fixing mechanisms 52 for fixing the second upper frame 32 under its raised posture. The left and right fixing mechanisms 52, each, includes a first hole 50A defined through the left/right side wall 50 in the left/right direction, left and right second holes 32A extending through the lower end portion of the second upper frame 32 in the left/right direction, a fixing pin 53 to be inserted into the left and right first holes 50A and the left and right second holes 32A when the second upper frame 32 assumes the raised posture, a female threaded portion 51A disposed at a position of same height as the left and right first holes 50A and extending through the rear wall 51 in the front/rear direction, and a bolt 54 threaded and fitted in the female threaded portion 51A.

With the above-described arrangement, the worker will firstly raisably pivot the second upper frame 32 to the raised posture and then in the left and right respective fixing mechanism 52, the fixing pin 53 is inserted into the left and right first holes 50A of the second lower frame 31 and the left and right second holes 32A of the second upper frame 32, whereby the second upper frame 32 can be fixed under the raised posture. Thereafter, in the left and right respective fixing mechanism 52, with threading-in operation of the bolt 54 threaded into the female threaded portion 51A of the second lower frame 31, the predetermined portion located between the fixing pin 53 and the bolt 54 at the lower end portion of the second upper frame 32 will be clamped by the fixing pin 53 and the bolt 54, whereby wobbling or looseness of the second upper frame 32 under the raised posture can be prevented.

As a result, the second upper frame 32 can be fixed in a reliable manner without wobbling or looseness under the raised posture.

As shown in Fig. 3 and Figs. 4 and 8, the second lower frame 31, includes, at each left/right upper end portion thereof, a receiving tool 55 for receiving the second upper frame 32 under the collapsed posture. The left and right receiving tools 55 are installed at front lower end portions of the left and right side walls 50 corresponding thereto.

The left and right fixing mechanism 52, each includes third holes 50B in the left and right side walls 50 to enable fixing of the second upper frame 32 under the collapsed posture by the fixing pin 53. Each third hole 50B is formed at a position facing the respective second hole 32A of the second upper frame 32 under the collapsed posture.

With the above-described arrangement, the worker will firstly collapsibly pivot the second upper frame 32 to the collapsed posture and then in the left and right respective fixing mechanism 52, the fixing pin 53 is inserted into the left and right third holes 50B of the second lower frame 31 and the left and right second holes 32A of the second upper frame 32, whereby the second upper frame 32 can be fixed under the collapsed posture.

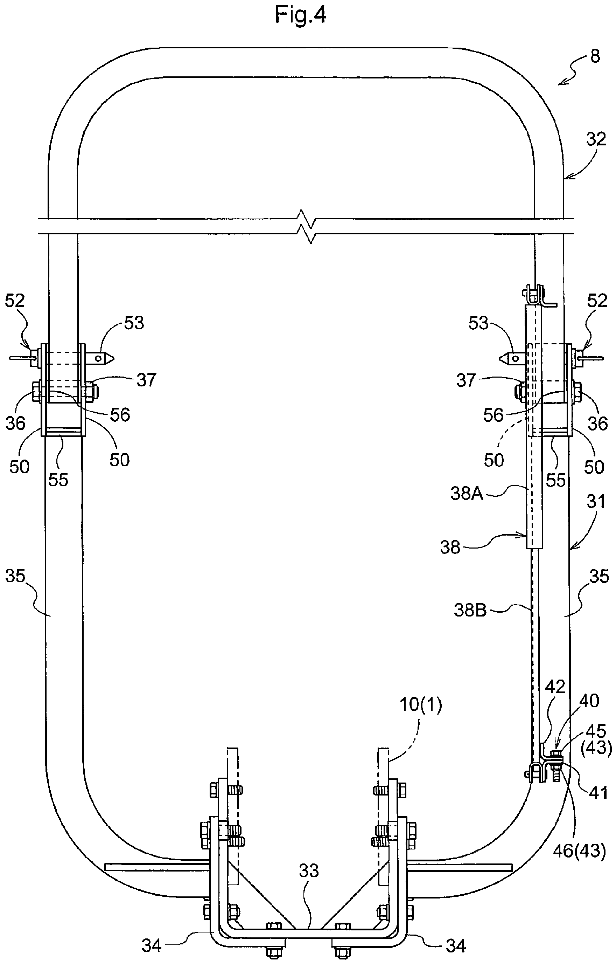

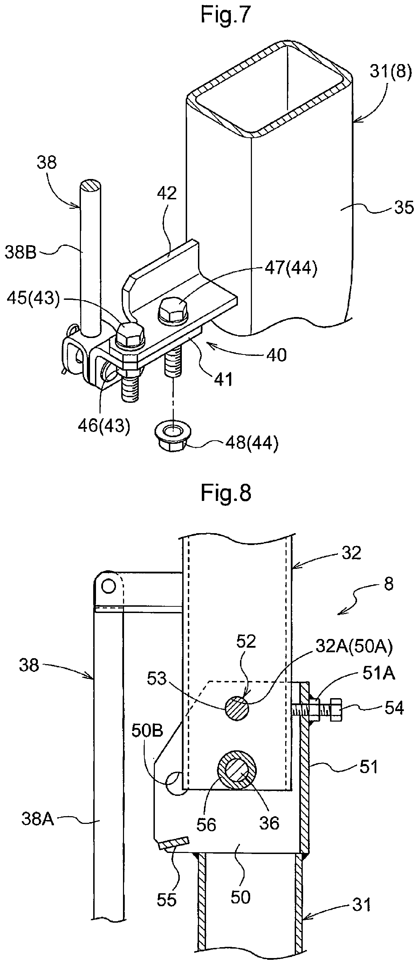

As shown in Fig. 4 and Fig. 8, the second upper frame 32 includes, at each left/right lower end portion thereof, a boss 56 for allowing connection to left and right upper end portions of the second lower frame 31 by means of bolts 36 or the like. The left and right bosses 56 have a length extending between the left and right side walls 50.

With the above-described arrangement, in the second upper frame 32, when the left and right lower end portions are connected to the left and right upper end portions of the second lower frame 31 by means of the bolts 36 or the like, left and right end faces of the bosses 56 come into contact with the left and right side walls 50, thus preventing wobbling or looseness relative to the second lower frame 31 in the left/right direction.

### [OTHER EMBODIMENTS]

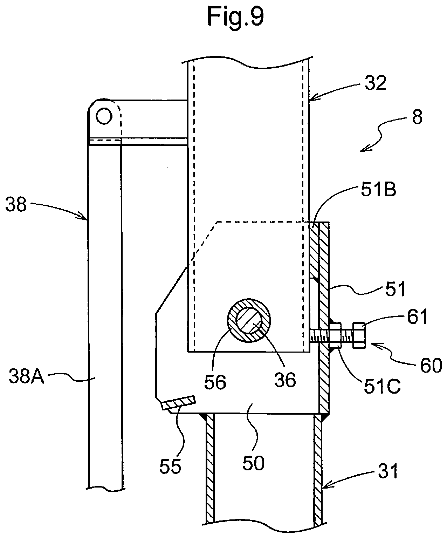

[1] The work vehicle can employ the following arrangements.
   For instance, the work vehicle can be configured as a semi-crawler type having left and right crawlers instead of the left and right rear wheels 5.
   For instance, the work vehicle can be configured as a full-crawler type having left and right crawlers instead of the left and right front wheels 4 and the left and right rear wheels 5.
   For instance, the work vehicle can be configured as an electric powered type having an electric motor instead of the engine 13.
   For instance, the work vehicle can be configured as a hybrid type having the engine 13 and an electric motor.
   For instance, the work vehicle can be configured with both first protective frame 7 and second protective frame 8 being switchable between the protecting state and the storing state.
   Incidentally, in the above case, both the first protective frame 7 and the second protective frame 8 correspond to the "protective frame" defined in the appended claims.
   For instance, the work vehicle can be configured with the first protective frame 7 being switchable between the protecting state and the storing state and with the second protective frame 8 being non-switchable to the storing state.
   Incidentally, in the above case, the first protective frame 7 corresponds to the "protective frame" defined in the appended claims.
   For instance, the work vehicle can include only one of the first protective frame 7 and the second protective frame 8.
   Incidentally, in the above case, the first protective frame 7 or the second protective frame 8 provided in the work vehicle corresponds to the "protective frame" defined in the appended claims.
[2] The arrangement of the second protective frame 8 can vary in many ways as follows.
   For instance, the second protective frame 8 can be configured such that under the storing state, the second upper frame 32 assumes the collapsed state (including a perpendicularly suspended state) and disposed on the rear side of the second lower frame 31.
   Incidentally, in the above case, preferably, the left and right upper end portions of the second lower frame 31 are respectively formed in a U-shape as seen in a plan view having the left and right side walls 50 and the front wall, and these front walls serve to prevent pivotal movement of the second upper frame 32 from the raised posture to the vehicle body front side opposite to the collapsed posture.
   For instance, in the second protective frame 8, instead of the arrangement that the upper end portion of the second lower frame 31 is formed into the U-shape as seen in a plan view having the left and right side walls 50 and the rear wall 51, the lower end portion of the second upper frame 32 may be formed into the U-shape as seen in a plan view having the left and right side walls 50 and the front wall or the rear wall 51.
   For instance, in the second protective frame 8, round steel pipes or the like may be employed instead of the angular steel pipes for the second lower frame 31 and the second upper frame 32.
[3] The second protective frame 8 can include a fixing mechanism 60 arranged as shown in Fig. 9, instead of the fixing mechanism 52 described in the foregoing embodiment.
   The fixing mechanism 60 illustrated in Fig. 9 includes a receiving portion 51B disposed at a position upwardly of the support shaft 36 of the rear wall 51 and receiving the second upper frame 32 under the raised posture, a female threaded portion 51C disposed downwardly of the support shaft 36 and extending through the rear wall 51 in the front/rear direction, and a bolt 61 to be threaded and fitted in the female threaded portion 51C.
   With the above-described arrangement, the worker will firstly raisably pivot the second upper frame 32 to the raised posture, and then, with threading-in operation of the bolt 61 threaded and fitted in the female threaded portion 51C of the second lower frame 31, a lower end portion of the second upper frame 32 downwardly of the support shaft 36 will be pressed by the bolt 61. With this, the lower end portion of the second upper frame 32 upwardly of the support shaft 36 will be pressed against the receiving portion 51B, whereby the second upper frame 32 will be fixed under the raised posture without wobbling or looseness.
   Namely, after raisably pivoting the second upper frame 32 to the raised posture, only with the threading-in operation of the bolt 61, the second upper frame 32 can be fixed in a reliable manner without wobbling or looseness.
[4] The arrangement of the assisting mechanism 38 can vary in many ways as follows.
   For instance, in the assisting mechanism 38, its lower end portion may be connected not to the second lower frame 31, but to the vehicle body frame 1.
   For instance, the assisting mechanism 38 may be mounted to the second protective frame 8 under the raised posture such that the cylinder tube 38A of the gas spring 38 employed as this assisting mechanism 38 is disposed on the lower side of the vehicle body and the piston rod 38B is disposed on the upper side of the vehicle body.
   For instance, the assisting mechanism 38 can employ, instead of the gas spring, e.g. a tension spring, a torsion spring, or a shock absorber (a dumper) which is expanded/contracted by a function of a compression spring.
   For instance, the assisting mechanism 38 can be arranged such that when the second upper frame 32 assumes the collapsed posture, the collapsing force due to the weight of the second upper frame 32 and the assisting force from the assisting mechanism 38 are balanced with each other.
   For instance, the assisting mechanism 38 can be arranged such that when the second upper frame 32 assumes the raised posture, the collapsing force due to the weight of the second upper frame 32 and the assisting force from the assisting mechanism 38 are balanced with each other.
[5] The gas spring may be arranged such that its lower end portion is pivotally pin-connected to the second lower frame 31 and the upper end portion of the gas spring 38 is connected to the second upper frame 32 via the position adjustment mechanism (connecting mechanism) 40 for threadingly connecting this upper end portion into the second upper frame 32 from the upper side thereof.
   With this arrangement, when the gas spring 38 is to assembled to the vehicle body, the worker will firstly pivotally pin-connect the lower end portion of the gas spring 38 to the second lower frame 31. Next, with the position adjustment mechanism 40, the upper end portion of the gas spring 38 will be connected by being threaded into the second upper frame 32 from the upper side thereof. With this, in association with the threading-in connection by the position adjustment mechanism 40, the gas spring 38 can be contracted and the upper end portion of the gas spring 38 will be connected to the second upper frame 32 from the upper side thereof.
   Namely, with this arrangement, the gas spring 38 can be contracted in association with threading-in operation at the time of threading-in connection by the position adjustment mechanism 40. Thus, there is no need for the manual operation for contracting the gas spring 38. Hence, the assembly of the gas spring 38 to the vehicle body can be facilitated.
   With the above-described arrangement, it is contemplated that the position adjustment mechanism 40 include a first member 41 to be pivotally pin-connected to the upper end portion of the gas spring 38, a second member 42 fixed to the second upper frame 32, a screw type first connecting tool 43 for connecting the first member 41 to the second member 42 from the upper side of this second member 42 and a second connecting tool 44 for connecting the first member 41 to the second member 42 after completion of the connection by the first connecting tool 43.
   With the above-described arrangement, when the upper end portion of the gas spring 38 is to be connected to the second upper frame 32, the worker will firstly pin-connect the first member 41 to the upper end portion of the gas spring 38. Next, as the worker effects a threading-in operation of the first connecting tool 43 for connecting the first member 41 to the second member 42 disposed downwardly thereof, in association with this threading-in operation, the first member 41 will be connected with the second member 42 while the gas spring 38 is being contracted. And, as a connecting operation by the second connecting tool 44 is effected after completion of the above connection, the first member 41 and the second member 42 will be further connected to each other by the second connecting tool 44.
   With the above, the worker can fix the first member 41 to the second member 42 firmly by the simple operation.
[6] In the position adjustment mechanism (connecting mechanism) 40, the second connecting tool 44 may be configured to pin-connect the first member 41 to the second member 42 in non-position-adjustable manner.

The present invention is applicable to a work vehicle such as a tractor, a riding lawn mower, a multi-purpose vehicle and so on, having a protective frame including a lower frame fixed to a vehicle body frame and an upper frame raisably/collapsibly pivotally connected to an upper end portion of the lower frame.

## Claims

1. A work vehicle comprising:
a protective frame (8) including a lower frame (31) fixed to a vehicle body frame (1) and an upper frame (32) raisably/collapsibly pivotally connected to an upper end portion of the lower frame (31);
wherein in association with a raising/collapsing pivotal movement of the upper frame (32) by an operator's manual operation, the protective frame (8) is switched over to either a protecting state wherein the upper frame (32) is set to a raised posture and disposed upwardly of the lower frame (31) or a storing state wherein the upper frame (32) is set to a collapsed posture and disposed on one front/rear side of the lower frame (31); and
the protective frame (8) includes an assisting mechanism (38) configured to assist the manual operation;
**characterized in that**
the assisting mechanism (38) comprises a gas spring (38) disposed under a raised posture to a collapsing side of the upper frame (32); and
a lower end portion of the gas spring (38) is connected to the vehicle body frame (1) or the lower frame (31) via a position adjustment mechanism (40) for allowing position adjusting of the lower end portion in a vertical direction.

2. The work vehicle of claim 1, wherein the position adjustment mechanism (40) includes a first member (41) pivotally pin-connected to a lower end portion of the gas spring (38), a second member (42) fixed to the vehicle body frame (1) or the lower frame (31), a screw type first connecting tool (43) for connecting the first member (41) to the second member (42) from the lower side thereof, with allowing position adjustment in the vertical direction, and a second connecting tool (44) for connecting the first member (41) to the second member (42) in position-non-adjustable manner at a connecting position by the first connecting tool (43).

3. A work vehicle comprising:
a protective frame (8) including a lower frame (31) fixed to a vehicle body frame (1) and an upper frame (32) raisably/collapsibly pivotally connected to an upper end portion of the lower frame (31);
wherein in association with a raising/collapsing pivotal movement of the upper frame (32) by an operator's manual operation, the protective frame (8) is switched over to either a protecting state wherein the upper frame (32) is set to a raised posture and disposed upwardly of the lower frame (31) or a storing state wherein the upper frame (32) is set to a collapsed posture and disposed on one front/rear side of the lower frame (31); and
the protective frame (8) includes an assisting mechanism (38) configured to assist the manual operation;
**characterized in that**
the assisting mechanism (38) comprises a gas spring (38) disposed under a raised posture to a collapsing side of the upper frame (32); and
an upper end portion of the gas spring (38) is connected to the upper frame (32) via a position adjustment mechanism (40) for allowing position adjusting of the upper end portion in a vertical direction.

4. The work vehicle of claim 3, wherein the position adjustment mechanism (40) includes a first member (41) pivotally pin-connected to an upper end portion of the gas spring (38), a second member (42) fixed to the upper frame (32), a screw type first connecting tool (43) for connecting the first member (41) to the second member (42) from the upper side thereof, with allowing position adjustment in the vertical direction, and a second connecting tool (44) for connecting the first member (41) to the second member (42) in position-non-adjustable manner at a connecting position by the first connecting tool (43).

5. The work vehicle of any one of claims 1-4, wherein the gas spring (38) pivotally urges the upper frame (32) in the raising direction.

6. A work vehicle comprising:
a protective frame (8) including a lower frame (31) fixed to a vehicle body frame (1) and an upper frame (32) raisably/collapsibly pivotally connected to an upper end portion of the lower frame (31);
wherein in association with a raising/collapsing pivotal movement of the upper frame (32) by an operator's manual operation, the protective frame (8) is switched over to either a protecting state wherein the upper frame (32) is set to a raised posture and disposed upwardly of the lower frame (31) or a storing state wherein the upper frame (32) is set to a collapsed posture and disposed on one front/rear side of the lower frame (31); and
the protective frame (8) includes an assisting mechanism (38) configured to assist the manual operation;
**characterized in that**
an upper end portion of the lower frame (31) comprises a U-shape as seen in a plan view, including left and right side walls (50) to which a lower end portion of the upper frame (32) is connected via a support shaft (36) under a posture along the left/right direction and a front wall or a rear wall (51) that inhibits pivotal movement of the upper frame (32) from the raised posture to the side opposite the collapsed posture;
the protective frame (8) includes a fixing mechanism (52) for fixing the upper frame (32) under the raised posture; and
the fixing mechanism (52) includes a first hole (50A) extending through the left and right side walls (50) in the left/right direction, a second hole (32A) extending through the lower end portion of the upper frame (32) in the left/right direction, a fixing pin (53) to be inserted into the first hole (50A) and the second hole (32A) under the raised posture, a female threaded portion (51A) positioned at a same height as the first hole (50A) and extending through the front wall or the rear wall (51) in the front/rear direction, and a bolt (54) to be threaded and fitted to the female threaded portion (51A).

7. A work vehicle comprising:
a protective frame (8) including a lower frame (31) fixed to a vehicle body frame (1) and an upper frame (32) raisably/collapsibly pivotally connected to an upper end portion of the lower frame (31);
wherein in association with a raising/collapsing pivotal movement of the upper frame (32) by an operator's manual operation, the protective frame (8) is switched over to either a protecting state wherein the upper frame (32) is set to a raised posture and disposed upwardly of the lower frame (31) or a storing state wherein the upper frame (32) is set to a collapsed posture and disposed on one front/rear side of the lower frame (31); and
the protective frame (8) includes an assisting mechanism (38) configured to assist the manual operation;
**characterized in that**
an upper end portion of the lower frame (31) comprises a U-shape as seen in a plan view, including left and right side walls (50) to which a lower end portion of the upper frame (32) is connected via a support shaft (36) under a posture along the left/right direction and a front wall or a rear wall (51) that inhibits pivotal movement of the upper frame (32) from the raised posture to the side opposite the collapsed posture;
the protective frame (8) includes a fixing mechanism (60) for fixing the upper frame (32) under the raised posture; and
the fixing mechanism (60) includes a receiving portion (51B) disposed at a position more upwards than the support shaft (36) in the front wall or the rear wall (51) and configured to receive the upper frame (32) under the raised posture, a female threaded portion (51C) positioned downwardly of the support shaft (36) and extending through the front wall or the rear wall (51) in the front/rear direction, and a bolt (61) to be threaded and fitted to the female threaded portion.

8. The work vehicle of any one of claims 1-7, wherein the assisting mechanism (38) is set such that when the upper frame (32) is disposed on more raised posture side than a predetermined posture between the raised posture and the collapsed posture, an assisting force of the assisting mechanism (38) is greater than a collapsing force due to the weight of the upper frame (32); whereas, when the upper frame (32) is disposed on more collapsed posture side than the predetermined posture, the assisting force of the assisting mechanism (38) is smaller than the collapsing force due to the weight of the upper frame (32).

## Patentansprüche

1. Nutzfahrzeug, umfassend:
einen Schutzrahmen (8), der einen unteren Rahmen (31), welcher an einem Fahrzeugkarosserierahmen (1) befestigt ist, und einen oberen Rahmen (32), welcher mit einem oberen Endabschnitt des unteren Rahmens (31) anhebbar/umklappbar schwenkverbunden ist,
wobei in Zusammenhang mit einer Anhebe/Umklapp-Schwenkbewegung des oberen Rahmens (32) durch eine manuelle Betätigung durch eine Bedienperson der Schutzrahmen (8) entweder in einen Schutzzustand, in dem der obere Rahmen (32) in eine angehobene Stellung gestellt und oberhalb des unteren Rahmens (31) angeordnet ist, oder in einen Verstauzustand, in dem der obere Rahmen (32) in eine umgeklappte Stellung gestellt und auf einer vorderen/hinteren Seite des unteren Rahmens (31) angeordnet ist, umgeschaltet wird, und
der Schutzrahmen (8) einen Hilfsmechanismus (38) umfasst, der dazu ausgebildet ist, die manuelle Betätigung zu unterstützen,
**dadurch gekennzeichnet, dass**
der Hilfsmechanismus (38) eine Gasfeder (38) umfasst, die unter einer angehobenen Stellung zu einer Umklappseite des oberen Rahmens (32) angeordnet ist, und
ein unterer Endabschnitt der Gasfeder (38) mit dem Fahrzeugkarosserierahmen (1) oder dem unteren Rahmen (31) über einen Positionseinstellmechanismus (40) zum Ermöglichen einer Positionseinstellung des unteren Endabschnitts in einer senkrechten Richtung verbunden ist.

2. Nutzfahrzeug nach Anspruch 1, wobei der Positionseinstellmechanismus (40) ein erstes Glied (41), das mit einem unteren Endabschnitt der Gasfeder (38) schwenkbar verstiftet ist, ein zweites Glied (42), das an dem Fahrzeugkarosserierahmen (1) oder dem unteren Rahmen (31) befestigt ist, ein erstes Verbindungswerkzeug (43) vom Schraubentyp zum Verbinden des ersten Glieds (41) mit dem zweiten Glied (42) von dessen Unterseite aus, wobei eine Positionseinstellung in der senkrechten Richtung ermöglicht wird, und ein zweites Verbindungswerkzeug (44) zum Verbinden des ersten Glieds (41) mit dem zweiten Glied (42) auf nicht positionseinstellbare Weise an einer Verbindungsposition durch das erste Verbindungswerkzeug (43) umfasst.

3. Nutzfahrzeug, umfassend:
einen Schutzrahmen (8), der einen unteren Rahmen (31), welcher an einem Fahrzeugkarosserierahmen (1) befestigt ist, und einen oberen Rahmen (32), welcher mit einem oberen Endabschnitt des unteren Rahmens (31) anhebbar/umklappbar schwenkverbunden ist, umfasst,
wobei in Zusammenhang mit einer Anhebe/Umklapp-Schwenkbewegung des oberen Rahmens (32) durch eine manuelle Betätigung durch eine Bedienperson der Schutzrahmen (8) entweder in einen Schutzzustand, in dem der obere Rahmen (32) in eine angehobene Stellung gestellt und oberhalb des unteren Rahmens (31) angeordnet ist, oder in einen Verstauzustand, in dem der obere Rahmen (32) in eine umgeklappte Stellung gestellt und auf einer vorderen/hinteren Seite des unteren Rahmens (31) angeordnet ist, umgeschaltet wird, und
der Schutzrahmen (8) einen Hilfsmechanismus (38) umfasst, der dazu ausgebildet ist, die manuelle Betätigung zu unterstützen,
**dadurch gekennzeichnet, dass**
der Hilfsmechanismus (38) eine Gasfeder (38) umfasst, die unter einer angehobenen Stellung zu einer Umklappseite des oberen Rahmens (32) angeordnet ist, und
ein oberer Endabschnitt der Gasfeder (38) mit dem oberen Rahmen (32) über einen Positionseinstellmechanismus (40) zum Ermöglichen einer Positionseinstellung des oberen Endabschnitts in einer senkrechten Richtung verbunden ist.

4. Nutzfahrzeug nach Anspruch 3, wobei der Positionseinstellmechanismus (40) ein erstes Glied (41), das mit einem oberen Endabschnitt der Gasfeder (38) verstiftet ist, ein zweites Glied (42), das an dem oberen Rahmen (32) befestigt ist, ein erstes Verbindungswerkzeug (43) vom Schraubentyp zum Verbinden des ersten Glieds (41) mit dem zweiten Glied (42) von dessen Oberseite aus, wobei eine Positionseinstellung in der senkrechten Richtung ermöglicht wird, und ein zweites Verbindungswerkzeug (44) zum Verbinden des ersten Glieds (41) mit dem zweiten Glied (42) auf nicht positionseinstellbare Weise an einer Verbindungsposition durch das erste Verbindungswerkzeug (43) umfasst.

5. Nutzfahrzeug nach einem beliebigen der Ansprüche 1 - 4, wobei die Gasfeder (38) den oberen Rahmen (32) schwenkend in die Anheberichtung drückt.

6. Nutzfahrzeug, umfassend:
einen Schutzrahmen (8), der einen unteren Rahmen (31), welcher an einem Fahrzeugkarosserierahmen (1) befestigt ist, und einen oberen Rahmen (32), welcher mit einem oberen Endabschnitt des unteren Rahmens (31) anhebbar/umklappbar schwenkverbunden ist, umfasst,
wobei in Zusammenhang mit einer Anhebe/Umklapp-Schwenkbewegung des oberen Rahmens (32) durch eine manuelle Betätigung durch eine Bedienperson der Schutzrahmen (8) entweder in einen Schutzzustand, in dem der obere Rahmen (32) in eine angehobene Stellung gestellt und oberhalb des unteren Rahmens (31) angeordnet ist, oder in einen Verstauzustand, in dem der obere Rahmen (32) in eine umgeklappte Stellung gestellt und auf einer vorderen/hinteren Seite des unteren Rahmens (31) angeordnet ist, umgeschaltet wird, und
der Schutzrahmen (8) einen Hilfsmechanismus (38) umfasst, der dazu ausgebildet ist, die manuelle Betätigung zu unterstützen,
**dadurch gekennzeichnet, dass**
ein oberer Endabschnitt des unteren Rahmens (31) eine, von oben gesehen, U-Form umfasst, welche eine linke und eine rechte Seitenwand (50), mit denen ein unterer Endabschnitt des oberen Rahmens (32) über eine Trägerwelle (36) unter einer Stellung entlang der Links-Rechts-Richtung verbunden ist, und eine Vorderwand oder eine Hinterwand (51), welche eine Schwenkbewegung des oberen Rahmens (32) von der angehobenen Stellung zu der der umgeklappten Stellung entgegengesetzten Seite verhindert, umfasst,
der Schutzrahmen (8) einen Befestigungsmechanismus (52) zum Befestigen des oberen Rahmens (32) unter der angehobenen Stellung umfasst, und
der Befestigungsmechanismus (52) ein erstes Loch (50A), das sich in der Links-Rechts-Richtung durch die linke und die rechte Seitenwand (50) erstreckt, ein zweites Loch (32A), das sich in der Links-Rechts-Richtung durch den unteren Endabschnitt des oberen Rahmens (32) erstreckt, einen Befestigungsstift (53), der unter der angehobenen Stellung in das erste Loch (50A) und das zweite Loch (32A) einzusetzen ist, einen Innengewindeabschnitt (51A), der auf derselben Höhe wie das erste Loch (50A) angeordnet ist und sich durch die Vorderwand oder die Hinterwand (51) in der Richtung von vorne nach hinten erstreckt, und eine Schraube (54), die an dem Innengewindeabschnitt (51A) einzuschrauben und anzubringen ist, umfasst.

7. Nutzfahrzeug, umfassend:
einen Schutzrahmen (8), der einen unteren Rahmen (31), welcher an einem Fahrzeugkarosserierahmen (1) befestigt ist, und einen oberen Rahmen (32), welcher mit einem oberen Endabschnitt des unteren Rahmens (31) anhebbar/umklappbar schwenkverbunden ist, umfasst,
wobei in Zusammenhang mit einer Anhebe/Umklapp-Schwenkbewegung des oberen Rahmens (32) durch eine manuelle Betätigung durch eine Bedienperson der Schutzrahmen (8) entweder in einen Schutzzustand, in dem der obere Rahmen (32) in eine angehobene Stellung gestellt und oberhalb des unteren Rahmens (31) angeordnet ist, oder in einen Verstauzustand, in dem der obere Rahmen (32) in eine umgeklappte Stellung gestellt und auf einer vorderen/hinteren Seite des unteren Rahmens (31) angeordnet ist, umgeschaltet wird, und
der Schutzrahmen (8) einen Hilfsmechanismus (38) umfasst, der dazu ausgebildet ist, die manuelle Betätigung zu unterstützen,
**dadurch gekennzeichnet, dass**
ein oberer Endabschnitt des unteren Rahmens (31) eine, von oben gesehen, U-Form umfasst, welche eine linke und eine rechte Seitenwand (50), mit denen ein unterer Endabschnitt des oberen Rahmens (32) über eine Trägerwelle (36) unter einer Stellung entlang der Links-Rechts-Richtung verbunden ist, und eine Vorderwand oder eine Hinterwand (51), welche eine Schwenkbewegung des oberen Rahmens (32) von der angehobenen Stellung zu der der umgeklappten Stellung entgegengesetzten Seite verhindert, umfasst,
der Schutzrahmen (8) einen Befestigungsmechanismus (60) zum Befestigen des oberen Rahmens (32) unter der angehobenen Stellung umfasst, und
der Befestigungsmechanismus (60) einen Aufnahmeabschnitt (51B), der an einer weiter oben als die Trägerwelle (36) gelegenen Position in der Vorderwand oder der Hinterwand (51) angeordnet und dazu ausgebildet ist, den oberen Rahmen (32) unter der angehobenen Stellung aufzunehmen, einen Innengewindeabschnitt (51C), der unterhalb der Trägerwelle (36) angeordnet ist und sich durch die Vorderwand oder die Hinterwand (51) in der Richtung von vorne nach hinten erstreckt, und eine Schraube (61), die an dem Innengewindeabschnitt (51A) einzuschrauben und anzubringen ist, umfasst.

8. Nutzfahrzeug nach einem beliebigen der Ansprüche 1 - 7, wobei der Hilfsmechanismus (38) derart eingestellt ist, dass, wenn der obere Rahmen (32) mehr auf der Seite der angehobenen Stellung als eine vorbestimmte Stellung zwischen der angehobenen Stellung und der umgeklappten Stellung angeordnet ist, eine unterstützende Kraft des Hilfsmechanismus (38) größer ist als eine Umklappkraft aufgrund des Gewichts des oberen Rahmens (32), wohingegen, wenn der obere Rahmen (32) mehr auf der Seite der umgeklappten Stellung als die vorbestimmte Stellung angeordnet ist, eine unterstützende Kraft des Hilfsmechanismus (38) kleiner ist als die Umklappkraft aufgrund des Gewichts des oberen Rahmens (32).

## Revendications

1. Véhicule de travail comprenant :
un bâti de protection (8) comprenant un bâti inférieur (31) fixé à une carrosserie de véhicule (1) et un bâti supérieur (32) raccordé de manière pivotante de façon à pouvoir être levé / replié sur une partie d'extrémité supérieure du bâti inférieur (31) ;
dans lequel, en association avec le mouvement pivotant de levage / repli du bâti supérieur (32) par une opération manuelle d'un opérateur, le bâti de protection (8) est commuté dans un état de protection dans lequel le bâti supérieur (32) est réglé sur une posture levée et disposé vers le haut du bâti inférieur (31) ou un état de stockage dans lequel le bâti supérieur (32) est réglé sur une posture repliée et disposé sur un côté avant / arrière du bâti inférieur (31) ; et
le bâti de protection (8) comprend un mécanisme d'assistance (38) configuré pour assister l'opération manuelle ;
**caractérisé en ce que** :
le mécanisme d'assistance (38) comprend un ressort à gaz (38) disposé dans une posture levée sur un côté de repli du bâti supérieur (32) ; et
une partie d'extrémité inférieure du ressort à gaz (38) est raccordée à la carrosserie de véhicule (1) ou au bâti inférieur (31) via un mécanisme d'ajustement de position (40) pour permettre d'ajuster la position de la partie d'extrémité inférieure dans une direction verticale.

2. Véhicule de travail selon la revendication 1, dans lequel le mécanisme d'ajustement de position (40) comprend un premier élément (41) raccordé par broche de manière pivotante à une partie d'extrémité inférieure du ressort à gaz (38), un second élément (42) fixé à la carrosserie de véhicule (1) ou au bâti inférieur (31), un premier outil de raccordement de type vis (43) pour raccorder le premier élément (41) au second élément (42) depuis son côté inférieur, avec l'autorisation de l'ajustement de position dans la direction verticale, et un second outil de raccordement (44) pour raccorder le premier élément (41) au second élément (42) d'une façon non ajustable en position, dans une position de raccordement par le premier outil de raccordement (43).

3. Véhicule de travail comprenant :
un bâti de protection (8) comprenant un bâti inférieur (31) fixé sur une carrosserie de véhicule (1) et un bâti supérieur (32) raccordé de manière pivotante de façon à pouvoir être levé / replié à une partie d'extrémité supérieure du bâti inférieur (31) ;
dans lequel, en association avec un mouvement pivotant de levage / repli du bâti supérieur (32) par l'opération manuelle d'un opérateur, le bâti de protection (8) est commuté dans un état de protection dans lequel le bâti supérieur (32) est réglé sur une posture levée et disposé vers le haut du bâti inférieur (31) ou un état de stockage dans lequel le bâti supérieur (32) est réglé dans une posture repliée et disposé sur un côté avant / arrière du bâti inférieur (31) ; et
le bâti de protection (8) comprend un mécanisme d'assistance (38) configuré pour assister l'opération manuelle ;
**caractérisé en ce que** :
le mécanisme d'assistance (38) comprend un ressort à gaz (38) disposé dans une position levée sur un côté de repli du bâti supérieur (32) ; et
une partie d'extrémité supérieure du ressort à gaz (38) est raccordée au bâti supérieur (32) via un mécanisme d'ajustement de position (40) pour permettre l'ajustement de la position de la partie d'extrémité supérieure dans une direction verticale.

4. Véhicule de travail selon la revendication 3, dans lequel le mécanisme d'ajustement de position (40) comprend un premier élément (41) raccordé de manière pivotante par broche à une partie d'extrémité supérieure du ressort à gaz (38), un second élément (42) fixé sur le bâti supérieur (32), un premier outil de raccordement de type vis (43) pour raccorder le premier élément (41) au second élément (42) à partir de son côté supérieur, en permettant l'ajustement de position dans la direction verticale, et un second outil de raccordement (44) pour raccorder le premier élément (41) au second élément (42) d'une manière non ajustable en position dans une position de raccordement par le premier outil de raccordement (43).

5. Véhicule de travail selon l'une quelconque des revendications 1 à 4, dans lequel le ressort à gaz (38) pousse de manière pivotante le bâti supérieur (32) dans la direction de levage.

6. Véhicule de travail comprenant :
un bâti de protection (8) comprenant un bâti inférieur (31) fixé à une carrosserie de véhicule (1) et un bâti supérieur (32) raccordé de manière pivotante de façon à pouvoir être levé / replié à une partie d'extrémité supérieure du bâti inférieur (31) ;
dans lequel, en association avec un mouvement pivotant de levage / repli du bâti supérieur (32) par l'opération manuelle de l'opérateur, le bâti de protection (8) est commuté dans un état de protection dans lequel le bâti supérieur (32) est réglé sur une posture levée et disposé vers le haut du bâti inférieur (31) ou un état de stockage dans lequel le bâti supérieur (32) est réglé dans une posture repliée et disposé sur un côté avant / arrière du bâti inférieur (31) ; et
le bâti de protection (8) comprend un mécanisme d'assistance (38) configuré pour assister l'opération manuelle ;
**caractérisé en ce que** :
une partie d'extrémité supérieure du bâti inférieur (31) comprend une forme de U, comme observé sur une vue en plan, comprenant des parois latérales gauche et droite (50) auxquelles une partie d'extrémité inférieure du bâti supérieur (32) est raccordée via un arbre de support (36) dans une posture le long de la direction gauche / droite et une paroi avant ou une paroi arrière (51) qui empêche le mouvement de pivotement du bâti supérieur (32) de la posture levée au côté opposé de la posture repliée ;
le bâti de protection (8) comprend un mécanisme de fixation (52) pour fixer le bâti supérieur (32) dans la posture levée ; et
le mécanisme de fixation (52) comprend un premier trou (50A) s'étendant à travers les parois latérales gauche et droite (50) dans la direction gauche / droite, un second trou (32A) s'étendant à travers la partie d'extrémité inférieure du bâti supérieur (32) dans la direction gauche / droite, une broche de fixation (53) à insérer dans le premier trou (50A) et le second trou (32A) dans la posture levée, une partie filetée femelle (51A) positionnée à la même hauteur que le premier trou (50A) et s'étendant à travers la paroi avant ou la paroi arrière (51) dans la direction avant / arrière, et un boulon (54) à visser et à monter sur la partie filetée femelle (51A).

7. Véhicule de travail comprenant :
un bâti de protection (8) comprenant un bâti inférieur (31) fixé sur une carrosserie de véhicule (1) et un bâti supérieur (32) raccordé de manière pivotante de façon à pouvoir être levé / replié, à une partie d'extrémité supérieure du bâti inférieur (31) ;
dans lequel, en association avec un mouvement pivotant de levage / repli du bâti supérieur (32) par l'opération manuelle d'un opérateur, le bâti de protection (8) est commuté dans un état de protection dans lequel le bâti supérieur (32) est réglé sur une posture levée et disposé vers le haut du bâti inférieur (31) ou un état de stockage dans lequel le bâti supérieur (32) est réglé sur une posture repliée et disposé sur un côté avant / arrière du bâti inférieur (31) ; et
le bâti de protection (8) comprend un mécanisme d'assistance (38) configuré pour assister l'opération manuelle ;
**caractérisé en ce que** :
une partie d'extrémité supérieure du bâti inférieur (31) comprend une forme de U, comme observé sur une vue plan, comprenant les parois latérales gauche et droite (50) auxquelles une partie d'extrémité inférieure du bâti supérieur (32) est raccordée via un arbre de support (36) dans une posture le long de la direction gauche / droite et une paroi avant ou une paroi arrière (51) qui empêche le mouvement de pivotement du bâti supérieur (32) de la posture levée au côté opposé à la posture repliée ;
le bâti de protection (8) comprend un mécanisme de fixation (60) pour fixer le bâti supérieur (32) dans la posture levée ; et
le mécanisme de fixation (60) comprend une partie de réception (51B) disposée dans une position davantage vers le haut que l'arbre de support (36) dans la paroi avant ou la paroi arrière (51) et configurée pour recevoir le bâti supérieur (32) dans la posture levée, une partie filetée femelle (51C) positionnée vers le bas de l'arbre de support (36) et s'étendant à travers la paroi avant ou la paroi arrière (51) dans la direction avant / arrière, un boulon (61) à visser et à monter sur la partie filetée femelle.

8. Véhicule de travail selon l'une quelconque des revendications 1 à 7, dans lequel le mécanisme d'assistance (38) est réglé de sorte que lorsque le bâti supérieur (32) est disposé sur un côté de posture plus levée qu'une posture prédéterminée entre la posture levée et la posture repliée, une force d'assistance du mécanisme d'assistance (38) est supérieure à une force de repli due au poids du bâti supérieur (32) ; alors que, lorsque le bâti supérieur (32) est disposé du côté de la posture plus repliée que la posture prédéterminée, la force d'assistance du mécanisme d'assistance (38) est inférieure à la force de repli due au poids du bâti supérieur (32).
